# EUROPÄISCHE PATENTANMELDUNG

(11) **EP 1 512 589 A1**
(43) Veröffentlichungstag der Anmeldung: **09.03.2005**
(21) Anmeldenummer: 04018990.4
(22) Anmeldetag: 11.08.2004
(51) Int. Cl.: B60R 25/00, B60R 25/04

(54) **Schlüsselelement für ein Kraftfahrzeug**

(30) Priorität: 02.09.2003 DE 10340351
(71) Anmelder: DaimlerChrysler AG, 70567 Stuttgart (DE)
(72) Erfinder: Siegel, Tom, 71636 Ludwigsburg (DE)

(57) **Zusammenfassung**

Die Erfindung bezieht sich auf ein Schlüsselelement 1 für ein Kraftfahrzeug mit einem Wahl- oder Schalthebel 3. Das Schlüsselelement 1 ist einer Aufnahme 2 zugeordnet, die an dem Wahl- oder Schalthebel 3 angeordnet ist. Aufgabe ist es, das Schlüsselelement 1 sowohl einer automatischen als auch einer schaltbaren Wähleinrichtung zuzuordnen und es so zu gestalten, dass der Startvorgang vereinfacht ist. Das Schlüsselelement 1 weist hierzu zumindest ein Bedienelement auf, das als Startknopf 4 für ein Antriebsaggregat des Kraftfahrzeugs ausgebildet ist.

## Beschreibung

Die Erfindung betrifft ein Schlüsselelement für ein Kraftfahrzeug, wobei das Schlüsselelement einer Aufnahme zugeordnet und die Aufnahme an einem Wahl- oder Schalthebel oder im Armaturen- bzw. Konsolenbereich angeordnet ist.

Es ist bereits ein Kombischlüsselelement, das einer Wähleinrichtung einer selbsttätigen Schaltvorrichtung zugeordnet ist, aus der DE 44 01 945 C1 bekannt. Das Kombischlüsselelement dient als Hebel der Wähleinrichtung und ist ausschließlich in der P-Stellung abziehbar, wodurch eine bordeigene Spannungsquelle gegenüber elektrischen Verbrauchern zwangsläufig gesperrt wird.

Der Erfindung liegt die Aufgabe zugrunde, ein Schlüsselelement derart auszubilden und anzuordnen, dass ihm eine zentrale optische Funktion zugewiesen wird und es sowohl automatischen als auch schaltbaren Wähleinrichtungen zugeordnet werden kann, wobei gleichzeitig der Startvorgang vereinfacht wird.

Gelöst wird die Aufgabe erfindungsgemäß dadurch, dass das Schlüsselelement zumindest ein Bedienelement aufweist, das als Startknopf für ein Antriebsaggregat des Kraftfahrzeugs ausgebildet ist.

Hierdurch wird erreicht, dass beim Starten der Brennkraftmaschine des Kraftfahrzeugs durch Betätigen des Startknopfes gleichzeitig die Hand des Fahrzeugführers den Wahl- oder Schalthebel erfasst. Nach dem Starten kann ohne einen Positionswechsel der Hand eine Schalt- oder Wählbewegung durchgeführt werden. Bei einer Anordnung im Armaturen- bzw. Konsolenbereich wird dem Startknopf eine zentrale optische Erkennungsfunktion zugeordnet. Der Fahrzeugführer kann ohne weitere Bemühungen sowohl von innerhalb als auch von außerhalb des Kraftfahrzeugs erkennen, ob sich der Schlüssel in der Aufnahme befindet.

Hierzu ist es vorteilhaft, dass das Schlüsselelement zumindest einen elektrischen Kontakt und/oder zumindest eine elektromagnetische und/oder kontaktlose Schnittstelle aufweist und über den elektrischen Kontakt und/oder über die elektromagnetische und/oder kontaktlose Schnittstelle mit zumindest in der Aufnahme vorgesehenen korrespondierenden Kontakten oder Schnittstellen verbunden ist. Dadurch lässt sich das Startsignal oder das Schließen eines Startschaltkreises zum Starten der Brennkraftmaschine über den Startknopf oder über die Armatur bzw. Konsole und die Aufnahme bewerkstelligen. Die Aufnahme ist über entsprechende elektrische Verbindungen im Wahl- oder Schalthebel oder in der Armatur bzw. Konsole mit der Startautomatik des Kraftfahrzeugs verbunden. Beim Einsetzen des Schlüsselelements in die Aufnahme wird der Zündschaltkreis aktiviert.

Neben einer elektromagnetischen Schnittstelle in der Aufnahme ist eine weitere elektromagnetische Schnittstelle im Kraftfahrzeug vorgesehen, die ebenfalls das Starten der Brennkraftmaschine ermöglicht, ohne dass das Schlüsselelement mit der Aufnahme verbunden ist. Dadurch kann die Brennkraftmaschine von außerhalb des Kraftfahrzeugs gestartet werden, unabhängig davon, ob das Kraftfahrzeug geschlossen oder geöffnet ist. Entsprechende Sicherheitsmaßnahmen und Vorkehrungen zum Aktivieren des Zündschaltkreises gewährleisten somit ein Warmlaufen der Brennkraftmaschine oder ein Vorkühlen der Fahrgastzelle über die Klimaanlage bei extremen Temperaturbedingungen.

Mit entsprechenden Mitteln, die Motorhaube des Kraftfahrzeugs von außen zu entriegeln und zu öffnen, besteht durch diese erfindungsgemäße Ausbildungsweise ferner die Möglichkeit, Reparaturen am Fahrzeug vorzunehmen und dabei ggf. die Brennkraftmaschine zu starten, ohne die Fahrgastzelle zu öffnen.

Eine zusätzliche Möglichkeit ist gemäß einer Weiterbildung, dass das Schlüsselelement über einen Verriegelungsmechanismus formschlüssig und lösbar mit der Aufnahme verbindbar ist und der Verriegelungsmechanismus über eine Entriegelung am Wahl- oder Schalthebel oder im Armaturen- bzw. Konsolenbereich lösbar ist. Dadurch wird erreicht, dass das Schlüsselelement als abschließender Teil des Wahl- oder Schalthebels fest mit dem Wahl- oder Schalthebel verbunden ist und der Zündschaltkreis aktiviert wird. Das Schlüsselelement bildet mit dem Wahl- oder Schalthebel eine funktionelle und optische Einheit. Ebenso wird erreicht, dass das Schlüsselelement als abschließender Teil des Armaturen- bzw. Konsolenbereichs fest mit der Armatur oder Konsole verbunden ist und der Zündschaltkreis aktiviert wird. Das Schlüsselelement bildet mit der Armatur oder Konsole eine funktionelle und optische Einheit.

Ferner ist es vorteilhaft, dass zur Übertragung eines Startsignals mindestens ein elektrischer Kontakt zwischen dem Startknopf und dem Schlüsselelement vorgesehen ist. Dadurch wird erreicht, dass das Startsignal unabhängig von der Aufnahme an eine zentrale Startautomatik übertragen wird.

Vorteilhaft ist es hierzu auch, dass das Schlüsselelement einen Sender und/oder Empfänger für elektromagnetische Signale und zumindest einen lesbaren Datenträger aufweist. Durch die lesbaren Datenträger werden dem Schlüsselelement neben der Funktion des Startens der Brennkraftmaschine weitere Funktionen zum Bedienen des Kraftfahrzeugs zugeordnet.

Gemäß einer bevorzugten Ausführungsform der erfindungsgemäßen Lösung ist schließlich vorgesehen, dass der lesbare Datenträger passiv mit einem anregbaren Schwingkreis oder aktiv mit einer Energiequelle ausgebildet ist und der Datenträger einen Code aufweist, den eine Steuereinheit im Kraftfahrzeug automatisch erkennt. Durch den lesbaren Datenträger wird das Schlüsselelement und somit der Benutzer identifizierbar. Ein anregbarer Schwingkreis hat den Vorteil, dass das Schlüsselelement keine eigene Energieversorgung braucht, um identifiziert zu werden und Startsignale oder sonstige Signale zu senden.

Von besonderer Bedeutung ist für die vorliegende Erfindung, dass im Schlüsselelement ein verschwenk- und/oder verschiebbarer Schlüssel integriert ist, der zumindest einem Schloss am Kraftfahrzeug zugeordnet ist. Dadurch wird der Zugang zum Kraftfahrzeug bei fehlender elektrischer Energie oder bei sonstigen Ausnahmesituationen gewährleistet.

Im Zusammenhang mit der erfindungsgemäßen Ausbildung und Anordnung ist es von Vorteil, dass das Schlüsselelement zumindest eine manuell bedienbare Funktionstaste aufweist, über die elektromagnetische Signale an eine Steuereinheit des Kraftfahrzeugs übermittelbar sind. Neben dem Startknopf sind Funktionstasten zum Bedienen einer Zentralverriegelung und beispielsweise zum Öffnen des Kofferraums vorgesehen.

Vorteilhaft ist es ferner, dass der Startknopf als Softtouch-Taste, als Drehknopf, als Schiebeelement oder als Scanner ausgebildet ist. Die Ausbildungsweise als Scanner erlaubt die Identifikation des Fingerabdrucks des Benutzers. Dadurch besteht nur für den autorisierten Benutzer die Möglichkeit, das Kraftfahrzeug zu starten. Eine entsprechende Kombination mit der Zentralverriegelung ermöglicht, den autorisierten Zugang zum Kraftfahrzeug sicherzustellen.

Weitere Vorteile und Einzelheiten der Erfindung sind in den Patentansprüchen und in der Beschreibung erläutert und in den Figuren dargestellt.

Dabei zeigen:
- Fig. 1: eine perspektivische Prinzipskizze eines Wahl- oder Schalthebels mit Aufnahme und Schlüsselelement,
- Fig. 2: die Rückseite eines Schlüsselelements.

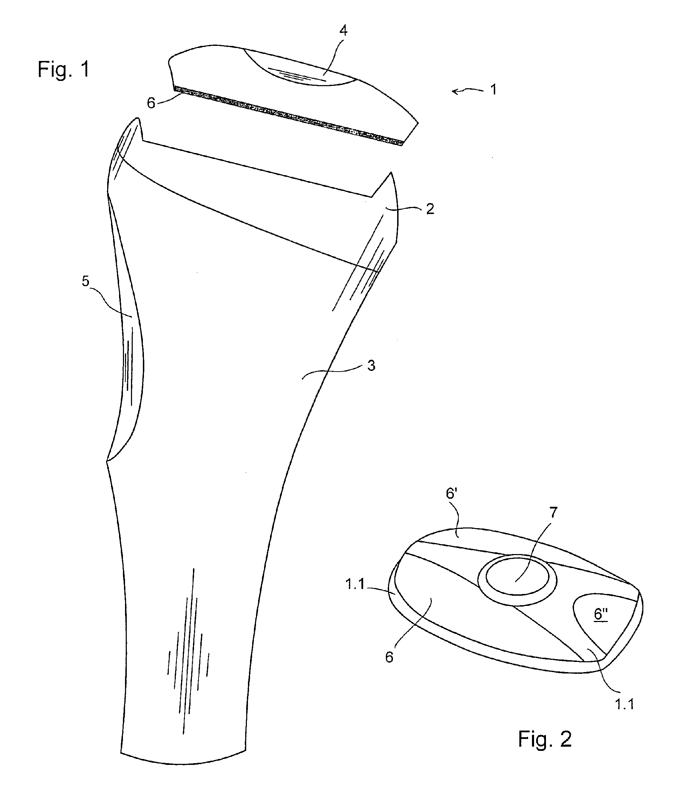

In Figur 1 ist eine perspektivische Prinzipskizze eines Wahl- oder Schalthebels 3 mit einer Aufnahme 2 und einem Schlüsselelement 1 dargestellt. Die Aufnahme 2 ist fest mit dem Wahl - oder Schalthebel 3 verbunden.

Die Aufnahme 2 dient der Aufnahme und dem Festlegen des Schlüsselelements 1. Hierzu wird das Schlüsselelement 1 in annähernd vertikaler Richtung von oben auf die Aufnahme 2 aufgesetzt. Durch einen in Figur 2 näher dargestellten Verriegelungsmechanismus 7 wird das Schlüsselelement 1 durch Einrasten festgelegt. Zum Lösen des Schlüsselelements 1 ist eine Entriegelung 5 am Wahl- oder Schalthebel 3 vorgesehen. Durch Betätigen der Entriegelung 5 wird das Schlüsselelement 1 gelöst und um wenige Millimeter angehoben, sodass es einfach mit der Hand von der Aufnahme 2 abzunehmen ist.

Das Schlüsselelement 1 weist einen Startknopf 4 auf, der auf der Oberseite des Schlüsselelements 1 vorgesehen ist. Über den Startknopf 4 lässt sich die Brennkraftmaschine des Kraftfahrzeugs starten. Hierzu ist das Schlüsselelement 1 über eine nicht dargestellte elektromagnetische und kontaktlose Schnittstelle mit der Aufnahme 2 verbunden. Die Aufnahme 2 wiederum ist über den Wahl- oder Schalthebel 3 mit einer entsprechenden Startautomatik verbunden.

Auf der Rückseite des Schlüsselelements 1 ist eine Funktionstaste 6 vorgesehen. Die Funktionstaste 6 und weitere Funktionstasten 6', 6" wie in Figur 2 dargestellt erweitern den Einsatzbereich des Schlüsselelements 1. Den Funktionstasten 6, 6', 6" ist die Steuerung der Zentralverriegelung des Kraftfahrzeugs zugeordnet. Durch die Funktionstasten 6, 6', 6" wird das Schlüsselelement 1 multifunktionell und verbindet eine konventionelle Schlüsseltechnik mit der erfindungsgemäßen Startvorrichtung.

Das Schlüsselelement 1 weist einen Rahmen 1.1 auf, in den die Funktionstasten 6, 6', 6" und der Verriegelungsmechanismus 7 eingelassen sind. Der Rahmen 1.1 unterteilt die Rückseite des Schlüsselelements 1 in drei Segmente. Die Funktionstasten 6, 6', 6" sind jeweils im Seitenbereich des Schlüsselelements 1 in den Segmenten angeordnet. In der Mitte des Rahmens 1.1 ist der Verriegelungsmechanismus 7 in Form eines federbelasteten Stiftes vorgesehen.

Der Rahmen 1.1 ist aus nicht ferritischem Material, um die elektromagnetischen Signale störungsfrei zu übertragen und dem Schlüsselelement 1 ein relativ hohes Eigengewicht zu geben. Das Eigengewicht vermittelt dem Benutzer eine technisch anspruchsvolle Eigenschaft des Schlüsselelements 1 und erleichtert die Ortung des Schlüsselelements 1 in Kleidungsstücken und Taschen.

## Patentansprüche

1. Schlüsselelement (1) für ein Kraftfahrzeug, wobei das Schlüsselelement (1) einer Aufnahme (2) zugeordnet und die Aufnahme (2) an einem Wahl- oder Schalthebel (3) oder im Armaturen- bzw. Konsolenbereich angeordnet ist,
**dadurch gekennzeichnet,**
**dass** das Schlüsselelement (1) zumindest ein Bedienelement aufweist, das als Startknopf (4) für ein Antriebsaggregat des Kraftfahrzeugs ausgebildet ist.

2. Vorrichtung nach Anspruch 1,
**dadurch gekennzeichnet,**
**dass** das Schlüsselelement (1) zumindest einen elektrischen Kontakt und/oder zumindest eine elektromagnetische und/oder kontaktlose Schnittstelle aufweist und über den elektrischen Kontakt und/oder über die elektromagnetische und/oder kontaktlose Schnittstelle mit zumindest in der Aufnahme (2) vorgesehenen korrespondierenden Kontakten oder Schnittstellen verbunden ist.

3. Vorrichtung nach Anspruch 1 oder 2,
**dadurch gekennzeichnet,**
**dass** das Schlüsselelement (1) über einen Verriegelungsmechanismus (7) formschlüssig und lösbar mit der Aufnahme (2) verbindbar ist und der Verriegelungsmechanismus (7) über eine Entriegelung (5) am Wahl- oder Schalthebel (3) oder im Armaturen- bzw. Konsolenbereich lösbar ist.

4. Vorrichtung nach einem der vorhergehenden Ansprüche,
**dadurch gekennzeichnet,**
**dass** zur Übertragung eines Startsignals mindestens ein elektrischer Kontakt zwischen dem Startknopf (4) und dem Schlüsselelement (1) vorgesehen ist.

5. Vorrichtung nach einem der vorhergehenden Ansprüche,
**dadurch gekennzeichnet,**
**dass** das Schlüsselelement (1) einen Sender und/oder Empfänger für elektromagnetische Signale und zumindest einen lesbaren Datenträger aufweist.

6. Vorrichtung nach einem der vorhergehenden Ansprüche,
**dadurch gekennzeichnet,**
**dass** der lesbare Datenträger passiv mit einem anregbaren Schwingkreis oder aktiv mit einer Energiequelle ausgebildet ist und der Datenträger einen Code aufweist, den eine Steuereinheit im Kraftfahrzeug automatisch erkennt.

7. Vorrichtung nach einem der vorhergehenden Ansprüche,
**dadurch gekennzeichnet,**
**dass** im Schlüsselelement (1) ein verschwenk- und/oder verschiebbarer Schlüssel integriert ist, der zumindest einem Schloss am Kraftfahrzeug zugeordnet ist.

8. Vorrichtung nach einem der vorhergehenden Ansprüche,
**dadurch gekennzeichnet,**
**dass** das Schlüsselelement (1) zumindest eine manuell bedienbare Funktionstaste (6) aufweist, über die elektromagnetische Signale an eine Steuereinheit des Kraftfahrzeugs übermittelbar sind.

9. Vorrichtung nach einem der vorhergehenden Ansprüche,
**dadurch gekennzeichnet,**
**dass** der Startknopf (4) als Softtouch-Taste, als Drehknopf oder als Schiebeelement ausgebildet ist.
